# EUROPEAN PATENT APPLICATION

(11) **EP 3 815 930 A1**
(43) Date of publication of application: **05.05.2021**
(21) Application number: 19812006.5
(22) Date of filing: 15.05.2019
(51) Int. Cl.: B60C 17/00, B60C 9/22, B60C 15/06

(54) **RUN-FLAT TIRE**

(30) Priority: 31.05.2018 JP 2018104620
(71) Applicant: Bridgestone Corporation, Chuo-Ku Tokyo 104-8340 (JP)
(72) Inventor: HASEGAWA, Keiichi, Tokyo 104-8340 (JP); ARIMA, Masayuki, Tokyo 104-8340 (JP)
(74) Representative: Oxley, Robin John George
(86) International application number: PCT/JP2019/019328
(87) International publication number: WO 2019/230402

(57) **Abstract**

A run-flat tire includes: a pair of bead portions in which bead cores are embedded; sidewall portions that are continuous with tire radial direction outer sides of the bead portions; a carcass that extends across the pair of bead portions and has a body portion that is positioned between the bead cores and turn-up portions that are turned up from inside to outside about the bead cores; a belt layer disposed on a tire radial direction outer side of the carcass; a tread provided on a tire radial direction outer side of the belt layer; side reinforcing layers that are made of rubber, disposed on the tire inner side of the body portion, and configured so that a thickness of the side reinforcing layers gradually decreases toward the tread and the bead portions; and bead fillers that are made of resin and provided between the bead cores, the body portion, and the turn-up portions.

## Description

### Technical Field

This disclosure relates to a run-flat tire.

### Background Art

Japanese Patent Application Laid-open No. H10-35232 discloses a run-flat tire that includes side reinforcing layers with a crescent-shaped cross section in sidewall portions of the tire. The side reinforcing layers are configured from a thermoplastic resin or a thermoplastic elastomer composition that has a high elastic modulus. Additionally, when the rigidity of the sidewall portions is secured at the same level as when conventional side reinforcing layers comprising a high hardness rubber are disposed, the wall thickness of the side reinforcing layers can be greatly decreased to reduce the thickness of the side reinforcing layers, thereby allowing the weight of the tire to be reduced.

### SUMMARY OF INVENTION

### Technical Problem

However, in the conventional example described above, when the tire is running at zero inflation pressure (atmospheric pressure), namely, when the tire is running flat, heat is generated as a result of the side reinforcing layers repeatedly deforming, and there is the potential for the resin configuring the side reinforcing layers to melt such that a tire failure occurs.

It is an object of this disclosure to reduce the thickness of side reinforcing layers made of rubber.

### Solution to Problem

A run-flat tire pertaining to the disclosure includes: a pair of bead portions in which bead cores are embedded; sidewall portions that are continuous with tire radial direction outer sides of the bead portions; a carcass that extends across the pair of bead portions and has a body portion that is positioned between the bead cores and turn-up portions that are turned up from inside to outside about the bead cores; a belt layer disposed on a tire radial direction outer side of the carcass; a tread provided on a tire radial direction outer side of the belt layer; side reinforcing layers that are made of rubber, disposed on a tire inner side of the body portion, and configured so that a thickness of the side reinforcing layers gradually decreases toward the tread and the bead portions; and bead fillers that are made of resin and provided between the bead cores, the body portion, and the turn-up portions.

In this run-flat tire, the range of the position of the tire radial direction outer ends of the bead fillers when based on the tire radial direction outer ends of the rim flange is appropriately set, so the vertical stiffness needed for the tire to run flat is supplemented by the bead fillers made of resin. Because of this, the vertical stiffness required of the side reinforcing layers decreases, so the thickness of the side reinforcing layers can be reduced. Advantageous Effects of Invention

According to the run-flat tire pertaining to the disclosure, the thickness of side reinforcing layers made of rubber can be reduced.

### BRIEF DESCRIPTION OF DRAWINGS

FIG. 1 is a semi-sectional view showing a run-flat tire pertaining to a first embodiment.
FIG. 2 is a semi-sectional view showing a run-flat tire pertaining to a first embodiment.
FIG. 3 is a scatter diagram showing the relationship between the height of bead fillers from a rim baseline and run-flat durability.

### DESCRIPTION OF EMBODIMENTS

Embodiments of the invention will be described below based on the drawings. In the drawings, "CL" denotes a tire equatorial plane and "BL" denotes a rim baseline. Furthermore, the direction of arrow R is a tire radial direction and the direction of arrow W is a tire width direction. "Tire radial direction" refers to a direction that is orthogonal to the axis of rotation of the tire (not shown in the drawings). "Tire width direction" refers to a direction that is parallel to the axis of rotation of the tire. The tire width direction can also be referred to as the tire axial direction.

The dimensions of each part are measured according to the method described in the 2018 edition of *YEAR BOOK* published by the Japan Automobile Tyre Manufacturers Association (JATMA). When TRA standards or ETRTO standards are applied in the place of use or the place of manufacture, those standards are followed.

### [First Embodiment]

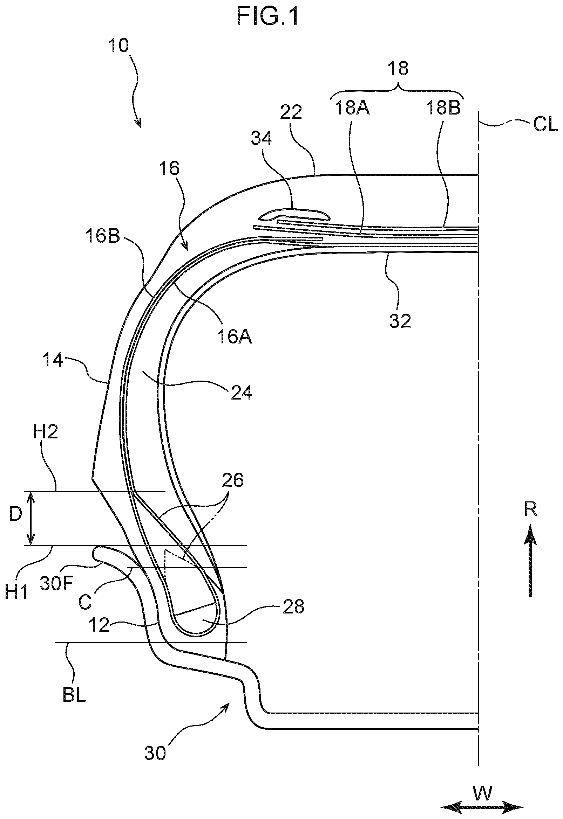

Referring to FIG. 1, a run-flat tire 10 pertaining to this embodiment has bead portions 12, sidewall portions 14, a carcass 16, a belt layer 18, a tread 22, side reinforcing layers 24, and bead fillers 26.

In the pair of bead portions 12, bead cores 28 are embedded. The bead portions 12 are parts that are fitted to a rim 30. Each of the bead cores 28 is configured by bead cords (not shown in the drawings) and formed in a loop shape. The bead cords are configured by metal cords such as steel cords, organic fiber cords, organic fiber cords coated with resin, or a hard resin, for example. In a case where the bead cores 28 are configured by a thermoplastic material, it is preferred that the thermoplastic material be an olefin-based, ester-based, amide-based, or urethane-based TPE, or a TPV in which rubber-based resin is partially kneaded. For these thermoplastic materials, it is preferred, for example, that their temperature of deflection under load (a load of 0.45 MPa) specified in ISO 75-2 or ASTM D648 be 75 °C or higher, their tensile strain at yield specified in JIS K7113 be 10% or more, their tensile strain at break specified in JIS K7113 be 50% or more, and their Vicat softening temperature (A test) specified in JIS K7113 be 130 °C or higher.

The sidewall portions 14 are parts that are continuous with tire radial direction outer sides of the bead portions 12. The sidewall portions 14 form side portions of the run-flat tire 10 and curve gently so as to be convex outward in the tire axial direction from the bead portions 12 to a crown portion 32. The crown portion 32 interconnects the sidewall portions 14 on both sides.

The carcass 16 extends across the pair of bead portions 12. The carcass 16 has a body portion 16A that is positioned between the bead cores 28 and turn-up portions 16B that are turned up from inside to outside about the bead cores 28. The carcass 16 is, for example, configured by coating cords arranged in a tire circumferential direction (not shown in the drawings) with rubber. As an example, the turn-up portions 16B extend to the crown portion 32 and are sandwiched between the belt layer 18 and the body portion 16A. It will be noted that the turn-up portions 16B may also terminate at the sidewall portions 14.

The belt layer 18 is disposed on the tire radial direction outer side of the carcass 16. The belt layer 18 is, for example, what is called a crisscrossing belt layer having an inner belt 18A and an outer belt 18B that lie on top of each other in the tire radial direction. The inner belt 18A and the outer belt 18B are each configured by coating, with rubber, plural cords (not shown in the drawings) disposed in parallel. Additionally, the cords of the inner belt 18A and the cords of the outer belt 18B intersect each other when viewed from the tire radial direction (not shown in the drawings).

On the tire radial direction outer sides of the tire width direction end portions of the belt layer 18, layers 34 for belt end reinforcement are provided. As fiber cord used for the layers 34, for example, aliphatic polyamide, polyester, or aromatic polyamide organic fiber cord can be used. It will be noted that steel cord can also be used as the fiber cord, and known layer materials used in common pneumatic tires can also be used. The fiber cord of the layers 34 is coated with rubber or resin. The layers 34 may also each include plural fiber cords, and may also each be configured by a sheet-like member of resin material alone or rubber alone not including fiber. It is preferred that the bending rigidity of the layers 34 be equal to or less than the bending rigidity of the belt layer 18 so that the layers 34 follow the deformation of the tread 22.

The tread 22 is provided on the tire radial direction outer side of the belt layer 18. In other words, the tread 22 is supported by the crown portion 32. The tread 22 has a contact surface that contacts road surfaces.

The side reinforcing layers 24 are made of rubber, disposed on a tire inner side of the body portion 16A of the carcass 16, and configured so that their thickness gradually decreases toward the tread 22 side and the bead portions 12 side. In other words, the side reinforcing layers 24 are each formed in a crescent shape in a tire width direction cross section.

The bead fillers 26 are made of resin and provided between the bead cores 28, the body portion 16A of the carcass 16, and the turn-up portions 16B of the carcass 16. The resin material configuring the resin of the bead fillers 26 is a thermoplastic elastomer. However, this embodiment is not limited to this, and, for example, thermoplastic resins, thermosetting resins, commodity plastics such as (meth)acrylic resin, EVA resin, polyvinyl chloride resin, fluorine-based resin, and silicone-based resin, and engineering plastics (including super engineering plastics) can be used as the resin material. It will be noted that the resin material here does not include vulcanized rubber.

Thermoplastic resins (including thermoplastic elastomers) are polymer compounds whose material becomes soft and fluid with an increase in temperature and becomes relatively hard and has a certain strength when cooled. In this specification, polymer compounds whose material becomes soft and fluid with an increase in temperature and becomes relatively hard and has a certain strength when cooled and which have a rubber-like elasticity are distinguished as thermoplastic elastomers, and polymer compounds whose material becomes soft and fluid with an increase in temperature and becomes relatively hard and has a certain strength when cooled and which do not have a rubber-like elasticity are distinguished as thermoplastic resins that are not elastomers.

Examples of thermoplastic resins (including thermoplastic elastomers) include thermoplastic polyolefin elastomers (TPO), thermoplastic polystyrene elastomers (TPS), thermoplastic polyamide elastomers (TPA), thermoplastic polyurethane elastomers (TPU), thermoplastic polyester elastomers (TPC), and dynamically crosslinked thermoplastic elastomers (TPV), as well as thermoplastic polyolefin resins, thermoplastic polystyrene resins, thermoplastic polyamide resins, and thermoplastic polyester resins.

Thermosetting resins are polymer compounds that form a three-dimensional network structure and harden with an increase in temperature, and examples thereof include phenolic resins, epoxy resins, melamine resins, and urea resins.

A position H2 of tire radial direction outer ends of the bead fillers 26 when based on a position H1 of tire radial direction outer ends of rim flanges 30F of the rim 30 in a state in which the bead portions 12 have been mounted on the rim 30 and inflation pressure is not being applied is in the range of-10 mm to +5 mm in the tire radial direction. In other words, a tire radial direction distance D between the positions H1 and H2 is -10 mm to +5 mm.

Here, "+" means that the position H2 of the tire radial direction outer ends of the bead fillers 26 is on the tire radial direction outer side of the position H1 of the tire radial direction outer ends of the rim flanges 30F as shown in FIG. 1. Conversely, "-" means that the position H2 of the tire radial direction outer ends of the bead fillers 26 is on a tire radial direction inner side of the position H1 of the tire radial direction outer ends of the rim flanges 30F.

When the position H2 of the tire radial direction outer ends of the bead fillers 26 when based on the position H1 of the tire radial direction outer ends of the rim flanges 30F is outside the range on the tire radial direction outer side (the + direction), there is the concern that the resin of the bead fillers 26 will melt when the tire is running flat, resulting in a drop in run-flat durability. Furthermore, when the position H2 is outside the range on the tire radial direction inner side (the - direction), melting of the resin of the bead fillers 26 when the tire is running flat does not occur, but vertical stiffness becomes deficient and there is less of an advantage in using resin for the bead fillers 26 from the standpoint of run-flat durability.

Assuming that C denotes the position of a rim separation point, which is the position at which the rim flanges 30F move away from the bead portions 12, it is desired that the position H2 of the tire radial direction outer ends of the bead fillers 26 be between the position H1 of the tire radial direction outer ends of the rim flanges 30F and the rim separation point C as indicated by the long dashed double-short dashed line in FIG. 1. In this case, the body portion 16A and the turn-up portions 16B of the carcass 16 are disposed along the outer shapes of the bead fillers 26 indicated by the long dashed double-short dashed line.

### (Action)

This embodiment is configured as described above, and the action thereof will be described below. Referring to FIG. 1, in the run-flat tire 10 pertaining to this embodiment, the range of the position H2 of the tire radial direction outer ends of the bead fillers 26 when based on the position H1 of the tire radial direction outer ends of the rim flanges 30F is appropriately set, so the vertical stiffness needed for the tire to run flat is supplemented by the bead fillers 26 made of resin. Because of this, the vertical stiffness required of the side reinforcing layers 24 decreases, so the thickness of the side reinforcing layers 24 can be reduced. Furthermore, because of the above range setting, melting of the resin of the bead fillers 26 when the tire is running flat does not occur, so durability for allowing the tire to run flat for a predetermined distance, or what is called run-flat durability, is ensured. The side reinforcing layers 24 are made of rubber, so there is no concern that the side reinforcing layers 24 will melt when the tire is running flat.

According to this embodiment, the thickness of the side reinforcing layers 24 made of rubber can be reduced while ensuring run-flat durability.

### [Second Embodiment]

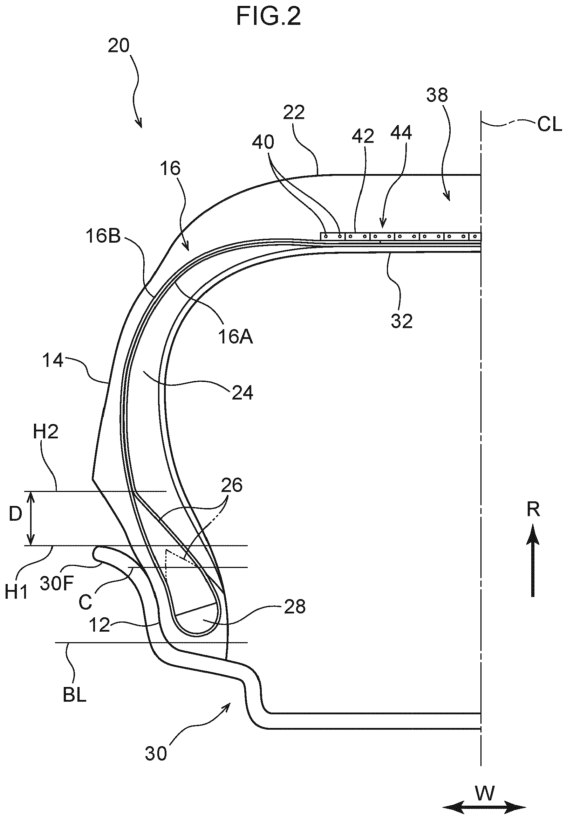

Referring to FIG. 2, in a run-flat tire 20 pertaining to this embodiment, a belt layer 38 is configured by coating cords 40 with resin 42. In the belt layer 38, resin-coated cords 44 configured by coating the cords 40 with the resin 42, which are spirally wound in the tire circumferential direction, and the resin 42 of one of the resin-coated cords 44 and the resin 42 of another of the resin-coated cords 44 that are adjacent to each other are integrally joined together by heat welding for example.

The tire radial direction inner surface of the resin 42 of the resin-coated cords 44 is joined to the outer periphery of the carcass 16. The tread 22 is joined via a rubber cushion (not shown in the drawings) to the tire radial direction outer surface of the resin 42. As an example, the turn-up portions 16B of the carcass 16 extend to the crown portion 32 and terminate in the vicinities of the tire width direction outer end portions of the belt layer 38.

Other portions are the same as those of the first embodiment, so identical portions are assigned identical reference signs in the drawings, and description thereof will be omitted.

### (Action)

This embodiment is configured as described above, and the action thereof will be described below. Referring to FIG. 2, in the run-flat tire 20 pertaining to this embodiment, the belt layer 38 is configured by coating the cords 40 with the resin 42. In particular, in the belt layer 38, the resin-coated cords 44 are spirally wound in the tire circumferential direction, and the resin 42 of the resin-coated cords 44 that are adjacent to each other is integrally joined together, so the bending rigidity of the tire outer peripheral portion is improved. For this reason, the durability of the tire outer peripheral portion can be further enhanced to inhibit the occurrence of buckling when the tire is running flat. Here, buckling is a phenomenon where part of the contact surface of the tread 22 rises up from the road surface due to deformation of the tread 22. Furthermore, because of this, the phenomenon of the bead portions 12 coming off the rim 30 can be inhibited when cornering as the tire is running flat.

### [Other Embodiments]

Examples of embodiments of the invention have been described above, but the embodiments of the invention are not limited to what is described above and can of course be modified and implemented in various ways, in addition to what is described above, in a range that does not depart from the spirit of the invention.

For example, the position H2 of the tire radial direction outer ends of the bead fillers 26 when based on the position H1 of the tire radial direction outer ends of the rim flanges 30F of the rim 30 in a state in which the bead portions 12 have been mounted on the rim 30 and inflation pressure is not being applied is not limited to the range of-10 mm to + 5 mm in the tire radial direction. So long as melting of the bead fillers 26 when the tire is running flat does not occur, the position H2 of the tire radial direction outer ends of the bead fillers 26 may also be outside the range on the + side. Furthermore, so long as the vertical stiffness is not deficient, the position H2 of the tire radial direction outer ends of the bead fillers 26 may also be outside the range on the - side.

### (Test Example)

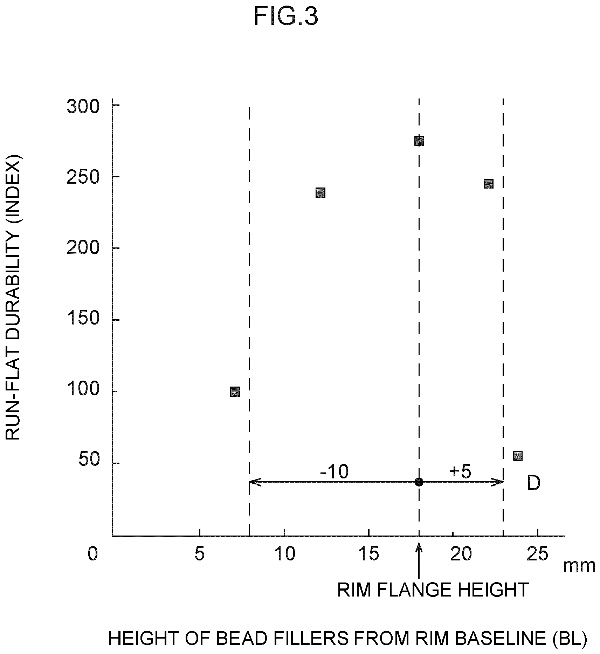

In FIG. 3 is shown the relationship between the height of the bead fillers from the rim baseline BL and run-flat durability. The evaluation of run-flat durability is based on running distance until tire failure in the run-flat durability drum test specified by the ISO (running at 80 km/hr while bearing 65% of the maximum load in the applied size ply rating described in the 2018 edition of *YEAR BOOK* published by JATMA). Run-flat durability is represented by an index using as a standard (100) a case where the bead filler height is 7 mm (D in FIG. 1 = -11 mm), so that the greater the numerical value is, the better the result is.

### [Test Conditions]

Tire size: 225/40R18
Rim: 18 inches
Inflation pressure: 0 (atmospheric pressure)

According to FIG. 3, it will understood that when the bead filler height is approximately 12 mm (D in FIG. 1 = - 6 mm), run-flat durability becomes approximately 2.4 times what it is in the standard case. Furthermore, it will be understood that when the bead filler height is approximately 18 mm (D in FIG. 1 = 0 mm), run-flat durability becomes approximately 2.7 times what it is in the standard case. Moreover, it will be understood that when the bead filler height is approximately 22 mm (D in FIG. 1 = +4 mm), run-flat durability becomes approximately 2.4 times what it is in the standard case. Further still, it will be understood that when the bead filler height is approximately 24 mm (D in FIG. 1 = +6 mm), run-flat durability drops to approximately 0.5 times what it is in the standard case. Namely, it will be understood that when D is in the range of-10 mm to +5 mm, run-flat durability is better than it is in the standard case.

The disclosure of Japanese Patent Application No. 2018-104620, filed on May 31, 2018, is incorporated in its entirety herein by reference.

All documents, patent applications, and technical standards mentioned in this specification are incorporated herein by reference to the same extent as if each individual document, patent application, or technical standard were specifically and individually indicated to be incorporated by reference.

## Claims

1. A run-flat tire comprising:
a pair of bead portions in which bead cores are embedded;
sidewall portions that are continuous with tire radial direction outer sides of the bead portions;
a carcass that extends across the pair of bead portions and has a body portion that is positioned between the bead cores and turn-up portions that are turned up from inside to outside about the bead cores;
a belt layer disposed on a tire radial direction outer side of the carcass;
a tread provided on a tire radial direction outer side of the belt layer;
side reinforcing layers that are made of rubber, disposed on a tire inner side of the body portion, and configured so that a thickness of the side reinforcing layers gradually decreases toward the tread and the bead portions; and
bead fillers that are made of resin and provided between the bead cores, the body portion, and the turn-up portions.

2. The run-flat tire of claim 1, wherein the positions of tire radial direction outer ends of the bead fillers, based on the positions of tire radial direction outer ends of rim flanges of a rim in a state in which the bead portions have been mounted on the rim and inflation pressure is not being applied, is in a range of-10 mm to +5 mm in a tire radial direction.

3. The run-flat tire of claim 1 or claim 2, wherein the belt layer is configured by coating cords with resin.

4. The run-flat tire of claim 3, wherein, in the belt layer, resin-coated cords, configured by coating the cords with the resin, which are spirally wound in a tire circumferential direction, and the resin of one of the resin-coated cords and the resin of another of the resin-coated cords that are adjacent to each other are integrally joined together.
